# FASCICULE DE BREVET EUROPEEN

(11) **EP 3 342 638 B1**
(45) Date de publication et mention de la délivrance du brevet: **31.07.2019**
(21) Numéro de dépôt: 17209936.8
(22) Date de dépôt: 22.12.2017
(51) Int. Cl.: B60Q 1/08, F21S 41/14, F21S 41/155, F21S 41/20, F21S 41/60, F21S 41/663, F21S 45/43, B60Q 1/14, B60Q 1/20, F21K 9/64, F21S 41/65, F21S 41/16, F21S 41/153, F21S 41/176

(54) **DISPOSITIF D'ÉCLAIRAGE POUR UN VÉHICULE, COMBINANT DEUX SOURCES LUMINEUSES**
BELEUCHTUNGSVORRICHTUNG FÜR EIN FAHRZEUG, DIE ZWEI LEUCHTQUELLEN KOMBINIERT
LIGHTING DEVICE FOR A VEHICLE, COMBINING TWO LIGHT SOURCES

(30) Priorité: 02.01.2017 FR 1750015
(43) Date de publication de la demande: 04.07.2018
(73) Titulaire: Valeo Vision, 93012 Bobigny Cedex (FR)
(72) Inventeur: ALBOU, Pierre, 93012 BOBIGNY Cedex (FR)
(74) Mandataire: Valeo Vision

(56) Documents cités:
- WO-A1-2014/205466
- DE-B3-102015 222 188
- FR-A1- 3 008 477
- KR-A- 20160 107 774

## Description

La présente invention est relative à un dispositif lumineux, permettant de réaliser une fonction d'éclairage pour un véhicule. Plus particulièrement, l'invention concerne un dispositif d'éclairage pour véhicule (typiquement un véhicule automobile), comprenant :
- un dispositif de conversion de longueur d'onde (comprenant typiquement des cristaux convertisseurs ou solides analogues convertisseurs répartis dans une couche du dispositif de conversion, ou encore molécules de colorant dispersées dans la couche) ;
- une première source lumineuse émettant un premier rayonnement lumineux ;
- un système de balayage recevant le premier rayonnement lumineux et le projetant par balayage sur une première région de conversion définie par le dispositif de conversion de longueur d'onde.

Le document WO 2014/205466 A1 illustre les connaissances de l'homme du métier au moment du dépôt de la présente demande.

La demande de brevet US20140029282 A de VALEO VISION décrit un exemple de dispositif d'éclairage de ce genre, dans lequel la source lumineuse est, soit une source laser unique, par exemple une diode laser dont la longueur d'onde peut correspondre à une couleur allant du bleu au proche ultraviolet, soit un dispositif optique combinant en un seul faisceau plusieurs rayonnements lasers, par exemple à l'aide de fibres optiques ou de dispositifs tirant profit des polarisations différentes de différentes sources laser.

Le dispositif de conversion de longueur d'onde, du type à plaque de luminophore, reçoit le rayon laser par le biais du système de balayage et émet dans une direction générale déterminée un rayonnement dans le visible. La plaque de luminophore peut être située au voisinage immédiat du plan focal d'un système optique d'imagerie, qui forme alors à l'infini une image de la plaque de luminophore, ou plus exactement des points ou secteurs de cette plaque (points ou secteurs définis typiquement par des cristaux convertisseurs ou autres éléments chimiques généralement solides ayant la propriété requise) qui émettent de la lumière blanche en réponse à l'excitation laser qu'ils reçoivent. Le dispositif de conversion d'onde présente une face de sortie, en vis-à-vis du système optique d'imagerie. La distribution des cristaux ou éléments chimiques solides convertisseurs est homogène dans la couche de conversion de la plaque de luminophore. L'expression « plaque de luminophore »,désigne une structure incluant au moins une couche d'un matériau à base de différents éléments chimiques ayant la propriété requise de conversion de longueur d'onde.

Pour obtenir en pratique un faisceau complet qui satisfait la réglementation pour l'éclairage de type code, il est nécessaire de disposer d'une puissance importante (plusieurs dizaines de Watt) pour la source laser et de ce fait, il faut multiplier les microsystèmes électromécaniques (MEMS) à miroirs, ce qui augmente le coût du dispositif d'éclairage. En effet, sans répartition et à la puissance maximale requise, un microsystème existant serait détruit par le rayonnement de la source laser.

En outre il serait difficile de multiplier les sources laser car il est très compliqué de combiner les faisceaux de différentes diodes laser de manière à avoir un diamètre faisceau suffisamment petit à la fois au niveau du système de balayage et du dispositif de conversion de longueur d'onde.

L'invention vise donc à obtenir un dispositif lumineux qui apporte de nouvelles possibilités de disposition et de conception d'un feu, et compatible avec un bon compromis entre performance d'éclairage et fiabilité.

A cet effet, l'invention concerne un dispositif d'éclairage du type susmentionné pour véhicule, en particulier pour l'éclairage (typiquement éclairage vers l'avant) d'un véhicule automobile, qui présente :
- une deuxième source lumineuse, distincte de la première source, qui émet un deuxième rayonnement lumineux et qui inclut :
   - une source de lumière à semi-conducteurs, comprenant des unités électroluminescentes de dimensions submillimétriques,
      sachant que le dispositif de conversion de longueur d'onde est conçu et agencé pour émettre (dans une même direction générale déterminée) :
      - un premier faisceau lumineux à partir de l'interaction, au niveau de la première région de conversion, du premier rayonnement lumineux avec le dispositif de conversion de longueur d'onde, et
      - un deuxième faisceau lumineux à partir de l'interaction, au niveau d'une deuxième région de conversion du dispositif de conversion de longueur d'onde, du deuxième rayonnement lumineux avec le dispositif de conversion de longueur d'onde.

De préférence, les unités électroluminescentes de dimensions submillimétriques sont sur un même substrat. Elles sont alors épitaxiées à partir de substrat.

De préférence le substrat est composé majoritairement de Silicium.

De préférence chaque unité électroluminescente comprend une première couche de semi-conducteur, une couche active et une seconde couche de semi-conducteur, chaque unité présentant une surface d'émission lumineuse.

De préférence, chaque unité se présente sous la forme de bâtonnets ou de plot.

De préférence, la luminance du premier rayonnement lumineux est supérieure à la luminance du second rayonnement lumineux.

Grâce à ces dispositions, il est permis de cumuler les avantages de performance liés à l'utilisation d'une source de lumière ayant typiquement une forte luminance et les avantages d'un éclairage de base modéré obtenu sans recours à un système de balayage, cet éclairage modéré résultant de la conversion du rayonnement d'une source de lumière à semi-conducteurs, en faisant fonctionner un dispositif de conversion commun à deux faisceaux.

Les unités électroluminescentes de la deuxième source de lumière, grâce à leur dimension submillimétrique, permettent un effet de pixellisation de l'éclairage, avec des possibilités de contrôle amélioré du faisceau. En particulier, la source de lumière à semi-conducteurs peut être contrôlée pour ajuster l'intensité de la luminosité émise par le dispositif de conversion, par exemple en obtenant un maximum situé dans la plage allant de 60 lux à 100 lux. Ceci permet avantageusement de réduire l'échauffement de la plaque de luminophore.

La source de lumière à semi-conducteurs présente avantageusement des possibilités de contrôle qui ne nécessitent pas de système de balayage comme pour une source laser ou source lumineuse équivalente et est moins couteuse à produire, à puissance équivalente, qu'une diode laser (par exemple une diode à émission laser bleue).

Selon une particularité, la première région de conversion présente une dimension caractéristique, typiquement un diamètre ou diamètre équivalent, qui est réduite par rapport aux dimensions (longueur et largeur, ou diamètre externe le cas échéant) de la couche de conversion du dispositif de conversion. Le ratio entre la surface du système de balayage effectivement utilisée pour la projection vers le dispositif de conversion et la surface réceptrice de la première région peut ainsi être réduit, même lorsqu'on utilise un système très miniaturisé (type MEMS), ce qui réduit les sollicitations pour le microsystème permettant le balayage. En outre, l'utilisation d'une ou plusieurs sources laser balayées sur une surface restreinte permet d'atteindre des luminances très élevées sans nécessiter une puissance aussi importante que ce qui serait nécessaire en balayant l'intégralité du dispositif de conversion de longueur d'onde (première et deuxième régions).

Concernant la deuxième région de conversion, celle-ci est plus étendue que la première région de sorte que le deuxième faisceau est comparativement plus large que le premier faisceau. On comprend, en effet, que le premier faisceau qui résulte de l'interaction avec le premier rayonnement lumineux sort du dispositif de conversion avec un diamètre (ou diamètre équivalent) réduit par rapport au deuxième faisceau. Cela résulte de l'utilisation d'une optique de projection commune.

Selon une particularité, le dispositif de conversion de longueur d'onde :
- s'étend d'un seul tenant depuis une première face jusqu'à une deuxième face (qui est de préférence sensiblement parallèle à la première face), et
- est adapté pour émettre dans une direction générale déterminée, au travers de la première face, le premier faisceau lumineux et le deuxième faisceau lumineux.
On comprend que la première région de conversion et la deuxième région de conversion s'étendent entre ces deux faces, et appartiennent typiquement à une même couche de conversion.

Selon une option, le rayonnement lumineux projeté par le système à balayage parvient au dispositif de conversion de longueur d'onde par la première face du dispositif de conversion. Dans ce cas, une couche de réflexion de ce rayonnement lumineux peut être prévue dans le dispositif de conversion, du côté de la deuxième face.

Optionnellement, la couche de réflexion peut réfléchir sélectivement le premier rayonnement, tout en permettant de laisser passer le deuxième rayonnement lumineux si la deuxième source lumineuse est accolée contre la deuxième face ou placée en vis-à-vis de cette deuxième face.

Optionnellement, la couche de réflexion peut réfléchir tout le spectre visible, à l'exception du deuxième rayonnement lumineux si la deuxième source lumineuse est accolée contre la deuxième face ou placée en vis-à-vis de cette deuxième face.

Une couche d'interconnexion, qui est de préférence configurée pour permettre d'allumer sélectivement tout ou partie des unités électroluminescentes, peut permettre d'activer les émissions lumineuses des unités électroluminescentes en formant des sous-zones ou pixels, de telles sous-zones pouvant présenter une taille et une luminance variable. Le contrôle de la deuxième source lumineuse par l'intermédiaire d'une telle couche d'interconnexion permet de sélectionner différentes configurations d'allumage des unités électroluminescentes. Il est permis de modifier une taille et/ou une luminance du deuxième faisceau lumineux par modification de la configuration d'allumage des unités électroluminescentes.

Lorsque la deuxième source lumineuse est en vis-à-vis de la première face, la couche de réflexion peut être formée par un miroir qui, optionnellement, peut servir de support pour le dispositif de conversion de longueur d'onde.

Selon une autre option, le rayonnement lumineux projeté par le système à balayage parvient au dispositif de conversion de longueur d'onde par la deuxième face du dispositif de conversion. Si le rayonnement lumineux issu des unités électroluminescentes de la deuxième source lumineuse parvient au dispositif de conversion de longueur d'onde par sa première face, une couche de réflexion peut être prévue pour réfléchir sélectivement ce deuxième rayonnement, tout en permettant de laisser passer le premier rayonnement.

Selon une particularité, la luminance du deuxième rayonnement lumineux peut être rendue non homogène. La luminance peut être ainsi augmentée localement en accentuant la densité d' unités électroluminescentes dans une sous-zone considérée. Un mode de rayonnement homogène peut être prévu par défaut (le mode hétérogène étant une option déclenchée en fonction des besoins d'éclairage).

Avantageusement, l'association des première source lumineuse et deuxième source lumineuse avec une plaque de luminophore placée derrière un système optique d'imagerie (incluant un objectif de projection dont la pupille de sortie présente un diamètre de 40 mm ou plus) permet de réaliser la fonction code, et optionnellement :
- la fonction route,
- la fonction de suivi de courbe (plus connue sous l'acronyme DBL - « *Dynamic Bending Light* » en anglais), tant en code qu'en route,
- la correction de portée sans mouvement du module d'éclairage ;
- un faisceau de mauvais temps (généralement connu avec l'acronyme anglais AWL pour « *Adverse Weather Light* ») ;
- un faisceau antibrouillard (alors exclusif du code, ce qui est réglementaire) ;
- et la fonction de route sans éblouissement (on parle alors de fonction ADB - *« Adaptive Driving Beam* » en anglais).

Il faut souligner que le système de balayage associé à la première source (typiquement une diode laser) facilite le suivi de courbe et peut faire varier, le cas échéant, le périmètre de la première région de conversion (région recevant en pratique un rayonnement de plus forte luminance, compte tenu de la nature différente de la première source lumineuse). Cette variation du périmètre balayé est activable notamment pour des besoins liés au mauvais temps ou à la conduite rapide du véhicule embarquant le dispositif d'éclairage (par exemple sur autoroute ou lorsqu'il est détecté que le véhicule roule plus vite qu'un seuil déterminé, par exemple plus de 110 km/h).

Un dispositif d'éclairage selon l'invention peut comporter l'une ou plusieurs des caractéristiques suivantes :
- le deuxième rayonnement lumineux résultant des émissions des unités électroluminescentes présente une longueur d'onde qui est décalée par rapport à la longueur d'onde du premier rayonnement lumineux, l'écart étant par exemple supérieur ou égal à 20 nm (avec cette disposition, il est permis de réaliser aisément une sécurité vis-à-vis d'une source laser ou source analogue de forte luminance, en disposant cette première source du côté de la première face et en absorbant sélectivement le premier rayonnement émis depuis cette première source par une couche d'absorption de la longueur d'onde du premier rayonnement par exemple située dans l'optique d'imagerie ; ceci permet d'éviter, en cas d'endommagement de la plaque de luminophore, que de la lumière laser puisse être reflétée directement vers l'extérieur) ;

- lorsque le deuxième rayonnement lumineux résultant des émissions des unités électroluminescentes présente au moins deux longueurs d'onde caractéristiques, chacune des longueurs d'onde caractéristiques est décalée par rapport à la longueur d'onde du premier rayonnement lumineux, l'écart étant par exemple supérieur ou égal à 20 nm ;
- la couche de conversion du dispositif de conversion de longueur d'onde présente une variété d'éléments chimiques permettant de convertir en lumière blanche des rayonnements ayant des longueurs d'onde différentes, qui sont situées dans le domaine visible et sont de préférence inférieures ou égale à 500 nm.
- la première source lumineuse est une source de lumière laser et que le premier rayonnement lumineux est un rayonnement laser.
- le rayonnement laser a une longueur d'onde comprise entre 400 nm et 500 nm.
- la deuxième source de lumière est configurée pour avoir une luminance comprise entre 30 Cd/mm² et 50 Cd/mm².
- la deuxième source de lumière comporte au moins deux zones activables sélectivement.
- les au moins deux zones sont configurées de sorte à avoir une luminance différente l'une par rapport à l'autre.
- les au moins deux zones sont configurées de sorte à avoir une taille différente l'une par rapport à l'autre, et un nombre différent d'unités électroluminescentes de dimensions submillimétriques.
- le deuxième rayonnement lumineux émis par la deuxième source lumineuse est d'une longueur d'onde inférieure ou égale à 500 nm.
- la longueur d'onde du deuxième rayonnement lumineux est contrôlée en fonction de la longueur d'onde du premier rayonnement lumineux.
- la deuxième source lumineuse est accolée au dispositif de conversion de longueur d'onde par l'intermédiaire d'une couche absorbante, la couche absorbante étant constituée d'un matériau adapté pour absorber le premier rayonnement lumineux.
- il est prévu un système optique recevant les premier et deuxième faisceaux lumineux émis par le dispositif de conversion de longueur d'onde, le système optique comprenant au moins un dioptre de diamètre supérieur ou égal à 40 mm et/ou au moins un dioptre permettant au dispositif d'éclairage de fonctionner comme un feu de code.
- la deuxième source lumineuse est adaptée pour émettre, directement ou indirectement, le deuxième rayonnement lumineux vers la première région de conversion.
- le balayage du premier rayonnement lumineux sur la première région de conversion est effectué à vitesse variable.
- la première région de conversion et la deuxième région de conversion sont colocalisées dans une même couche de conversion du dispositif de conversion de longueur d'onde, la couche de conversion étant de préférence à base d'au moins un matériau incluant le luminophore.
- le dispositif de conversion de longueur d'onde comprend une couche de conversion de longueur d'onde déposée sur une couche d'un substrat à base d'un matériau choisi parmi les matériaux bons conducteurs thermiquement.

D'autres caractéristiques et avantages de l'invention apparaîtront au cours de la description suivante de plusieurs de ses modes de réalisation, donnés à titre d'exemples non limitatifs, en regard des dessins joints dans lesquels :
- la figure 1 est une vue schématique d'un dispositif d'éclairage selon un premier mode de réalisation de l'invention ;
- la figure 2 est une vue schématique en coupe illustrant un dispositif de conversion de longueur d'onde utilisable pour recevoir les émissions de la première source lumineuse et de la deuxième source lumineuse ;
- la figure 3 est une vue similaire de la figure 1, illustrant un dispositif d'éclairage selon un deuxième mode de réalisation de l'invention ;
- la figure 4 illustre une variante de positionnement du dispositif de conversion de longueur d'onde, utilisable dans un troisième mode de réalisation de l'invention ;
- la figure 5 illustre une vue de face montrant un exemple de deuxième source lumineuse qui présente différentes zones à bâtonnets électroluminescents.

Sur les différentes figures, les mêmes références désignent des éléments identiques ou similaires.

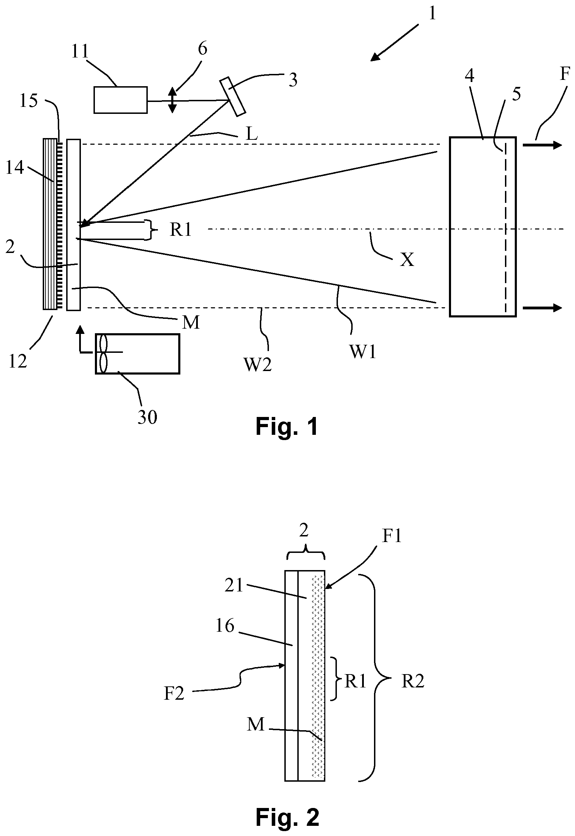

Les figures 1 et 2 représentent un premier mode de réalisation d'un dispositif d'éclairage 1 pouvant faire partie d'un feu de véhicule automobile, par exemple d'un feu avant. Le dispositif d'éclairage 1 peut être embarqué dans un logement fermé de manière étanche et au moins en partie entouré par une enveloppe externe du véhicule. De façon connue en soi, le feu peut présenter une glace de fermeture (non représentée) au travers de laquelle les rayons lumineux du faisceau sortant F peuvent passer.

Ici, le dispositif d'éclairage 1 comprend deux sources lumineuses 11 et 12 associées à un même dispositif de conversion de longueur d'onde 2. L'alimentation de ces deux sources lumineuses 11, 12 respectives est de type électrique et d'un genre connu en soi. Généralement dans tout ce qui suit, l'alimentation électrique des composants du dispositif d'éclairage 1 n'est pas représentée, ceci afin de ne pas alourdir inutilement les figures.

Le système de balayage 3 montré sur la figure 1 est prévu pour intercepter le premier rayonnement lumineux émis par la première source lumineuse 11 et renvoyer par réflexion ce rayonnement lumineux L vers une face (non absorbante et typiquement transparente), ici une première face F1, du dispositif de conversion de longueur d'onde 2. La première source lumineuse 11 est typiquement une source laser comprenant par exemple une diode laser. De façon connue en soi, un système optique d'imagerie 4 est placé entre le dispositif de conversion de longueur d'onde 2 et la glace, afin de transmettre un faisceau sortant F selon une direction déterminée. Un tel système optique d'imagerie 4 est pourvu d'au moins dioptre 5 ou dispositif équivalent définissant une pupille de sortie dont le diamètre est supérieur ou égal à 40 mm. On comprend que le système optique 4 permet de remplir au moins la fonction de code.

La première source lumineuse 11 comporte aussi des moyens optiques classiques de focalisation 6 et permet d'émettre un rayonnement laser dont la longueur d'onde est comprise entre 400 nanomètres et 500 nanomètres, et de préférence voisine de 450 ou 460 nanomètres. Ces longueurs d'onde correspondent à des couleurs allant du bleu au proche ultraviolet. Le système de balayage 3, de type conventionnel, comprend dans l'exemple décrit un micro-miroir unique, mobile autour de deux axes orthogonaux.

En référence à la figure 1, le rayonnement lumineux L de type laser est réfléchi par le micro-miroir vers une première région R1 de conversion du dispositif de conversion de longueur d'onde 2. Le rayonnement propre à ce dispositif de conversion de longueur d'onde 2 est transmis vers le système optique d'imagerie 4.

En référence à la figure 2, la première région R1 de conversion peut correspondre à une petite zone qui est centrale dans la couche de conversion 21 formée dans le dispositif de conversion de longueur d'onde 2. La couche de conversion 21 recouvre une couche de substrat 16 qui présente ici un effet réfléchissant pour le rayonnement lumineux L de type laser, au moins au niveau d'une zone centrale adjacente à la première région R1 de conversion.

Dans un mode de réalisation préféré, le dispositif de conversion de longueur d'onde 2 est déposé sur un substrat choisi parmi les matériaux bons conducteurs thermiquement. La couche de substrat 16 peut ainsi dissiper l'échauffement dans la première région R1 de conversion. Comme illustré sur la figure 1, cette première région R1 est traversée par l'axe optique X du dispositif optique d'imagerie 4.

Le dispositif de conversion de longueur d'onde 2 s'étend d'un seul tenant depuis la première face F1 jusqu'à une deuxième face F2 sensiblement parallèle à la première face F1, de sorte qu'il présente un format de plaque. La première face F1 constitue ici une face externe unique au travers de laquelle peut être transférée la totalité du rayonnement utile du dispositif de conversion de longueur d'onde 2, selon une direction générale déterminée.

Dans ce premier mode de réalisation, le système de balayage 3 et le système optique d'imagerie 4 sont disposés du même côté, qui correspond au côté de réflexion de la couche de substrat 16. De ce même côté, la couche de substrat 16 peut être recouverte d'une couche continue et homogène formant la couche de conversion 21. On forme ainsi une plaque de luminophore. Dans la couche de conversion, au moins un matériau M à propriété phosphorescente ou éventuellement fluorescent est présent. De façon connue, chaque point de cette couche de conversion 21 recevant le rayonnement laser L (ici ce rayonnement monochromatique et cohérent est reçu dans la première région R1 de conversion), réémet vers le système d'imagerie optique 4 une lumière W1 de longueur d'onde différente, et notamment une lumière qui peut être considérée comme « blanche », c'est-à-dire qui comporte une pluralité de longueurs d'onde entre environ 400 nanomètres et 800 nanomètres, c'est-à-dire comprises dans le spectre de la lumière visible. Cette émission de lumière se produit, selon un diagramme d'émission lambertienne, c'est-à-dire avec une luminance uniforme dans toutes les directions.

Comme bien visible sur la figure 2, la couche de conversion 21 présente une région R2 de conversion plus étendue que la première région R1 et qui inclut la première région R1 plus centrale. Cette région R2 peut correspondre à tout ou partie de la couche de conversion 21. Dans la forme de réalisation illustrée sur la figure 1, la couche de conversion 21 interagit également avec un deuxième rayonnement lumineux qui traverse (par l'arrière) la deuxième face F2 du dispositif de conversion de longueur d'onde 2.

Ce deuxième rayonnement lumineux, de luminance inférieure, au premier rayonnement lumineux issu de la première source lumineuse 11, est généré par une source de lumière (14, 15) à semi-conducteurs qui présente une pluralité d'unitésélectroluminescents 15 de dimensions submillimétriques. Ces unités prennent la forme ici de bâtonnet. Chacun de ces bâtonnets électroluminescents 15 s'étend de façon filaire depuis une surface commune. La source de lumière (14, 15) est définie par une puce ou dispositif optoélectronique similaire, par exemple sensiblement du même genre que le dispositif décrit dans le document WO 2016/001200. Le dispositif optoélectronique peut comprendre des groupes de bâtonnets électroluminescents 15 associés chacun à un circuit de commande.

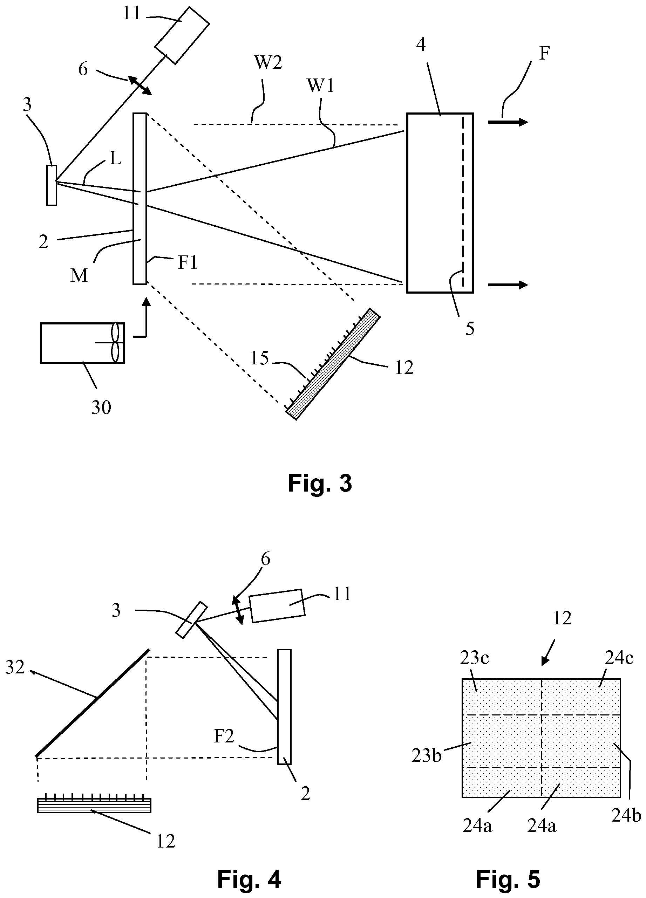

En référence à la figure 5, des bâtonnets électroluminescents 15 sont répartis en plusieurs groupes correspondant à des zones 23a, 23b, 23c et 24a, 24b, 24c de la deuxième source lumineuse 12. Ces zones 23a, 23b, 23c et 24a, 24b, 24c sont activables sélectivement. Il est permis par exemple d'éclairer selon différents modes, par exemple et de manière non limitative :
- toutes les zones à l'exception de zones inférieures 23a, 24a ;
- toutes les zones à l'exception de zones supérieures 23c, 24c ;
- toutes les zones situées d'un même côté (droit ou gauche), c'est-à-dire soit les zones 23a à 23c, soit les zones 24a à 24c ;
- seulement des zones intermédiaires 23 b et 24b.

Plus généralement, la deuxième source lumineuse apporte une flexibilité de réglage des zones d'éclairage, et permet de diviser ces zones à la façon de pixels. Bien entendu, la plus grande dimension (côté s'il s'agit d'un format carré, diamètre s'il s'agit d'un format rond) de la deuxième source lumineuse est alors supérieure à 5 mm et typiquement supérieure ou égale à 10 mm. On comprend que ce contrôle permet d'ajuster avec davantage de finesse l'image projetée à l'infini par le système optique d'imagerie 4 et/ou la luminance souhaitée pour le faisceau sortant F.

Au moins certaines des zones 23a, 23b, 23c et 24a, 24b, 24c sont optionnellement configurées de sorte à avoir une luminance différente l'une par rapport à l'autre. A titre d'exemple, la deuxième source lumineuse 12 présente au moins deux zones qui sont configurées de sorte à avoir :
- une taille différente l'une par rapport à l'autre, et
- un nombre différent de bâtonnets électroluminescents 15 de dimensions submillimétriques.

La structure à bâtonnets électroluminescents 15 permet d'obtenir un rendement d'extraction lumineuse très élevé. Le deuxième rayonnement lumineux émis par la deuxième source lumineuse 12 est par exemple d'une longueur d'onde inférieure ou égale à 500 nm (tout en restant de préférence supérieure, égale ou légèrement inférieure à 400 nm), ce qui permet d'interagir de façon optimale avec la couche de conversion 21.

En référence aux figures 1 et 2, le dispositif optoélectronique formant ici la deuxième source lumineuse 12 peut émettre une lumière bleue ou UV depuis une face de sortie qui est orientée vers une deuxième région R2 de conversion du dispositif de conversion de longueur d'onde 2. La première région R1 peut être contenue dans cette deuxième région R2 de conversion. Autrement dit, la couche de conversion 21 du dispositif de conversion de longueur d'onde 2 est localement éclairée par la combinaison du premier rayonnement lumineux et du deuxième rayonnement lumineux. Dans l'exemple de la figure 1, la deuxième source lumineuse 12 émet directement le deuxième rayonnement lumineux vers la couche de conversion 21, selon la direction générale déterminée, de sorte qu'il atteint la totalité de la première région R1 de conversion.

La couche de conversion 21 à base de matériau luminophore (souvent phosphorescent) peut alors être considérée comme une source de rayonnement secondaire, constituée d'une image lumineuse (résultant ici de la combinaison du premier rayonnement lumineux et du deuxième rayonnement lumineux), dont le système optique d'imagerie 4 forme une image à l'infini, par exemple sur un écran placé à distance dans l'axe X du système optique 4 et perpendiculairement à cet axe.

La deuxième source lumineuse 12 est ici placée en arrière du dispositif de conversion de longueur d'onde 2 qui se présente par exemple sous la forme d'une plaque ou lame mince de luminophore (par exemple à substrat céramique type zérodur®, ayant une grande stabilité thermique).

La densité de bâtonnets électroluminescents 15 est ajustée pour obtenir une luminance modérée, de l'ordre de 30 à 50 Cd/mm²; suffisante pour obtenir un maximum d'intensité de l'ordre de 60 Ix à 100 Ix sur l'axe à 25m, réduisant l'échauffement du dispositif de conversion de longueur d'onde 2. Un module de refroidissement 30 est typiquement prévu pour réduire l'échauffement dans la couche de conversion 21 où est générée la lumière blanche. Un flux d'air est ici généré par le module de refroidissement. Alternativement, un échange thermique peut être réalisé par utilisation d'un matériau liquide et/ou un matériau à changement de phase.

Une couche de luminophore peut aussi être formée directement sur la deuxième source lumineuse 12. Dans cette option, les bâtonnets électroluminescents 15 sont avantageusement encapsulés dans une couche de conversion 21 (constituée de luminophores encapsulés dans un polymère silicone). On peut alors considérée que la couche de substrat 16 est le substrat silicium (bon conducteur thermique) de la deuxième source lumineuse 12 (substrat silicium qui se trouve alors derrière les bâtonnets électroluminescents 15). Ce substrat peut être revêtu d'une couche réfléchissante (anode aluminium par exemple).

Si la longueur d'onde des deux sources lumineuses respectives 11 et 12 est suffisamment différente, on peut assurer une fonction de sécurité en arrêtant la longueur d'onde du laser avec un filtre coupe bande situé par exemple dans le système optique 4. Cela n'empêche pas l'obtention de lumière blanche ; pour une application à laser bleu, la composante bleue nécessaire peut être fournie par la deuxième source lumineuse 12 à bâtonnets électroluminescents 15.

Dans une forme de réalisation préférée, une interface, par exemple sous la forme d'une couche d'interconnexion, permet de réaliser un éclairage par pixels, chaque pixel étant associé à un nombre défini de bâtonnets électroluminescents 15 du dispositif optoélectronique. Ainsi il est permis de contrôler la forme et l'intensité du faisceau de lumière blanche W2 issue de la deuxième région R2 de conversion.

A titre d'exemple non limitatif, le dispositif d'éclairage 1 réalise une fonction de feu d'éclairage pour véhicule automobile, notamment une fonction code. Le cas échéant, on peut former des pixels dont la taille et la luminance varient suivant les zones adressées au niveau de la deuxième source lumineuse 12. On peut optionnellement obtenir un maximum pour des luminances par des variations de densité de colonnes.

Dans le premier mode de réalisation, on comprend que le deuxième rayonnement lumineux présente une longueur d'onde suffisamment différente de la longueur d'onde du rayonnement laser L, afin que la couche de substrat 16 qui présente un effet réfléchissant ou absorbant pour le rayonnement laser L, puisse laisser passer le deuxième rayonnement lumineux. Ici, la deuxième source lumineuse 12 est accolée au dispositif de conversion de longueur d'onde 2 par l'intermédiaire de la couche de substrat 16.

Dans une option préférée, la longueur d'onde du deuxième rayonnement lumineux peut être choisie afin par exemple de différer suffisamment de la longueur d'onde du premier rayonnement lumineux.

Le fait de produire deux faisceaux de lumière blanche W1 et W2 par une couche de conversion 21 commune d'un même dispositif de conversion de longueur d'onde 2 permet d'accéder à une large variété de fonctions sans risque de détérioration ou destruction du système de balayage 3, car la puissance requise pour la première source lumineuse 11 reste très inférieur à ce qui est requis, par exemple pour une fonction d'éclairage en code, lorsqu'une seule source laser est utilisée.

Le faisceau lumineux F émergeant du système optique d'imagerie 4 est directement fonction des rayons lumineux (en lumière blanche) émis par la couche de conversion 21, qui sont eux-mêmes fonction :
- du rayonnement laser L qui balaye cette couche 21 au niveau de la première région R1 de conversion ; et
- du rayonnement issu des bâtonnets électroluminescents 15.
Une unité de commande (non représentée) peut piloter les différents composants 3 et 11 produisant le rayonnement laser L, ainsi que le rayonnement lumineux produit par les bâtonnets électroluminescents 15, selon la photométrie désirée du faisceau sortant F. En particulier, l'unité de commande pilote simultanément le système de balayage 3 et la première source lumineuse 11, pour que le rayonnement associé, ici le rayonnement laser L, balaye successivement des points de la première région R1 de conversion. L'amplitude du balayage peut être ajustée le cas échéant pour concentrer le rayonnement sur certains points de la première région R1 de conversion (la trace lumineuse définie par le rayonnement laser L peut avoir une forme de point, de tache plus large, voire une marque oblongue). L'intensité du rayonnement laser L peut être ajustée par ce pilotage.

Simultanément, notamment pour la fonction code et d'autres fonctions utilisées pendant une conduite de véhicule, l'unité de commande peut activer une sélection des zones 23a, 23b, 23c, 24a, 24b, 24c de la deuxième source lumineuse 12 et/ou ajuster la luminance correspondant à chacune des ces zones.

Ainsi, il est permis avec le même feu du véhicule automobile d'obtenir la fonction de feu de position (feu avant dans ce cas), avec un faisceau sortant F qui définit une surface d'éclairage plus importante, lorsque les conditions météorologiques le permettent, et comme feu antibrouillard (cas typiquement applicable à un feu arrière) avec un faisceau sortant F plus intense qui définit une surface d'éclairage réduite, lorsque les conditions météorologiques sont plus difficiles, avec une pluie intense ou du brouillard par exemple.

Dans une option, non représentée sur les figures, un système de modification de la fonction du feu est relié au dispositif d'éclairage 1. Ce système de modification peut être commandé à l'aide d'un calculateur du véhicule en fonction de paramètres de conduite. Alternativement ou en complément, ce système de modification est contrôlé par une commande manuelle actionnable depuis l'habitacle du véhicule par le conducteur. Dans ce cas, c'est le conducteur qui choisit quand changer la fonction du feu.

Lorsqu'un rayonnement laser L est généré par le biais de la première source lumineuse 11, le dispositif d'éclairage 1 peut être associé à un module de sécurité qui présente des moyens de détection de défaillance. Ainsi, en cas de défaillance du dispositif de conversion de conversion de longueur d'onde 2 ou du système de balayage 3, il est permis de couper automatiquement ou de réduire la luminance (par interposition d'un matériau dispersif ou un filtre adapté par exemple) de la source laser.

Un avantage de combiner un dispositif de conversion de longueur d'onde 2 par recouvrement d'une source lumineuse à bâtonnets électroluminescents est, comme dans le cas illustré à la figure 1 correspondant au premier mode de réalisation, de pouvoir utiliser une deuxième source qui peut être compacte et directement accolée à la couche de conversion 21. Avec ce type de solution, il n'y a pas nécessité d'ajouter sur le dispositif de conversion de longueur d'onde une optique de projection spécifique pour la deuxième source lumineuse 12.

Un deuxième mode de réalisation du dispositif d'éclairage 1 va à présent être décrit en référence à la figure 3.

Le dispositif d'éclairage 1 montré sur la figure 3 diffère du premier mode de réalisation essentiellement en ce que les positions de la deuxième source lumineuse 12 et du système de balayage 3 sont différentes. La structure du système de balayage 3, du système d'imagerie optique 4 et des sources 11 et 12 peut rester la même. La première source lumineuse 11 est de type laser et la longueur d'onde du premier rayonnement lumineux est significativement différente de la longueur d'onde des bâtonnets électroluminescents 15 de la deuxième source lumineuse 12. La différence est telle que les dérives thermiques, dans la plage d'utilisation, sont insuffisantes pour combler la différence de longueur d'onde.

Ici, le système de balayage 3 est optionnellement positionné en arrière de la couche de conversion 21, tandis que la deuxième source lumineuse 12 est située du côté de la première face F1. Le dispositif de conversion de longueur d'onde 2 diffère alors en ce qu'il présente une couche de fond qui laisse passer le rayonnement laser L pour atteindre la couche de conversion 21. Une couche qui disperse ce rayonnement laser L peut être prévue du côté de la première face F1. De plus, il peut être prévu de réfléchir le deuxième rayonnement lumineux par une surface réfléchissante, au moins dans la ou les régions périphériques à la zone centrale traversée par le rayonnement laser L. Dans ce cas compatible avec la figure 3, une optique de projection (non représentée) est située entre la deuxième source 12 et la première face F1. L'émission des bâtonnets électroluminescentes 15 n'étant pas directionnelle, on comprend qu'il est préférable d'orienter par un dispositif optique intermédiaire le rayonnement issu de la deuxième source lumineuse 12 avant d'atteindre le dispositif de conversion de longueur d'onde 2. Il est alors aussi permis d'obtenir une pixellisation de la deuxième source lumineuse 12 grâce à l'optique intermédiaire.

Du fait du recours à un dispositif optique intermédiaire, il est avantageusement permis d'utiliser une source 12 de taille (notamment moindre circonférence) nettement inférieure à la couche de conversion 21, ce qui constitue un avantage économique.

Selon les besoins, on peut aussi faire intervenir plusieurs dispositifs optoélectroniques émettant chacun un deuxième rayonnement lumineux qui traverse la première face pour exciter le matériau M à propriété phosphorescente (luminophore) dans la couche de conversion 21. On comprend que le dispositif de conversion de longueur d'onde permet alors de combiner deux faisceaux de lumière blanche W1 et W2.

Dans une variante de réalisation, lorsque à la fois le système de balayage 3 et la deuxième source lumineuse 12 sont en vis-à-vis de la première face F1, le dispositif de conversion de longueur d'onde 2 peut présenter une couche de réflexion (par exemple sous la forme d'un miroir) qui fait partie intégrante du dispositif de conversion de longueur d'onde 2 ou peut servir de support pour ce dispositif de longueur d'onde 2.Un troisième mode de réalisation du dispositif d'éclairage 1 va à présent être décrit en référence à la figure 4.

Le dispositif d'éclairage 1 montré sur la figure 4 diffère du premier mode de réalisation essentiellement en ce que les positions de la deuxième source lumineuse 12 et du système de balayage 3 sont différentes. La structure du système de balayage 3 et des sources 11 et 12 peut rester la même. Le système d'imagerie optique et le module optionnel de refroidissement ne sont pas représentés par soucis de simplification. La première source lumineuse 11 est de type laser. La longueur d'onde du premier rayonnement lumineux est significativement différente de la longueur d'onde de la lumière émise par les bâtonnets électroluminescents 15 appartenant à la deuxième source lumineuse 12.

Plus particulièrement ici, le système de balayage 3 est optionnellement positionné en arrière du dispositif de conversion de longueur d'onde 2 pour projeter le premier rayonnement lumineux vers la première région de conversion, tandis que la deuxième source lumineuse 12 émet indirectement le deuxième rayonnement lumineux vers la deuxième région de conversion, par le biais d'un miroir 32, d'un prisme ou de tout autre système optique de projection.

Le dispositif de conversion de longueur d'onde 2 diffère typiquement en ce qu'il est dépourvu de couche de fond ou présente une couche de fond laissant passer les rayonnements respectifs qui traversent la deuxième face F2 pour atteindre la couche de conversion 21. Lorsque la première source lumineuse 11 est une diode laser ou source analogue de rayonnement laser, on peut prévoir par exemple une couche qui reflète ce rayonnement laser, du côté de la première face F1 en direction de la face F2.

Dans cet exemple, l'échauffement de la plaque de luminophore du dispositif de conversion de longueur d'onde 2 peut être dissipé des deux côtés (première face F1 et deuxième face F2), en utilisant par exemple des couche externes à base d'un matériau choisi parmi les matériaux bons conducteurs thermiquement.

L'agencement illustré sur la figure 4 permet d'utiliser une deuxième source lumineuse 12 de taille nettement inférieure à la taille de la couche de conversion 21 (et donc économique), un dispositif optique de projection (par exemple le miroir 32) permettant d'agrandir l'image de cette source 12 à la taille de la région R2.

Selon les besoins, on peut aussi faire intervenir plusieurs dispositifs optoélectroniques qui émettent chacun un deuxième rayonnement lumineux traversant la deuxième face F2 pour exciter le matériau M dans différents endroits de la couche de conversion 21. Dans cette option, il est permis le cas échéant de prévoir une disposition, accolée ou non par rapport à la deuxième face F2, des dispositifs optoélectroniques autour d'un passage central prévu pour le rayonnement laser. Ceci permet de positionner le système de balayage 3 plus en arrière qu'un ou plusieurs des dispositifs optoélectroniques. Cependant pour des raisons de coût et d'encombrement, il est généralement préférable d'utiliser une deuxième source lumineuse 12 formée d'un seul tenant.

On comprend que le dispositif de conversion de longueur d'onde 2 permet alors de combiner deux faisceaux de lumière blanches W1 et W2, comme dans les modes de réalisation précédemment décrits. Ces faisceaux W1 et W2, produits par le dispositif de conversion de longueur d'onde 2 respectivement dans la première région R1 de conversion et dans la deuxième région R2 de conversion ont des caractéristiques différentes et se complètent pour réaliser une ou plusieurs fonctions d'éclairage.

Il doit être évident pour les personnes versées dans l'art que la présente invention permet des modes de réalisation sous de nombreuses autres formes spécifiques sans l'éloigner du domaine d'application de l'invention comme revendiqué.

Ainsi, bien que le système de balayage 3 a été présenté comme suffisamment rapide pour balayer une unique première région R1 du dispositif de conversion de longueur d'onde 2, on comprend que ce système de balayage 3 peut aussi, alternativement ou en complément, balayer des zones ponctuelles ou des sous-régions qui sont espacées les unes des autres.

Egalement, bien que la deuxième source lumineuse 12 a été illustrée dans les dessins comme présentant une seule source de lumière à semi-conducteurs pourvue de bâtonnets électroluminescents 15 et de dimensions relativement grandes (de l'ordre du centimètre par exemple), on comprend que la source lumineuse 12 peut présenter au moins deux unités à semi-conducteurs pourvues chacune de bâtonnets électroluminescents 15 conçues séparément et regroupées dans le dispositif d'éclairage 1 pour former le deuxième rayonnement lumineux qui est reçu par le dispositif de conversion de longueur d'onde 2.

Les dispositions illustrées sont non limitatives et le dispositif d'éclairage peut présenter d'autres agencements. Par exemple dans une variante non illustrée sur les figures, la première source lumineuse 11 de type laser, la deuxième source lumineuse 12 et le système optique 4 peuvent être placés du même côté par rapport au dispositif de conversion de longueur d'onde 2(assez similaire au cas de la figure 3 mais avec le rayonnement laser L provenant de l'autre côté).

## Revendications

1. Dispositif d'éclairage (1) pour véhicule comprenant :
- un dispositif de conversion de longueur d'onde (2) ;
- une première source lumineuse (11) émettant un premier rayonnement lumineux ;
- un système de balayage (3) recevant le premier rayonnement lumineux et le projetant par balayage sur une première région (R1) de conversion du dispositif de conversion de longueur d'onde ;
- une deuxième source lumineuse (12) émettant un deuxième rayonnement lumineux,
**caractérisé en ce que** la deuxième source lumineuse (12) inclut source de lumière (14, 15) à semi-conducteurs comprenant des unités électroluminescentes (15) de dimensions submillimétriques, et **en ce que** le dispositif de conversion de longueur d'onde (2) est apte à émettre :
- un premier faisceau lumineux (W1) à partir de l'interaction, au niveau de la première région (R1) de conversion, du premier rayonnement lumineux avec le dispositif de conversion de longueur d'onde, et
- un deuxième faisceau lumineux (W2) à partir de l'interaction, au niveau d'une deuxième région (R2) de conversion dudit dispositif de conversion de longueur d'onde, du deuxième rayonnement lumineux avec le dispositif de conversion de longueur d'onde.

2. Dispositif selon la revendication 1 ou 2, **caractérisé en ce que** le dispositif (2) de conversion de longueur d'onde s'étend d'un seul tenant depuis une première face (F1) jusqu'à une deuxième face (F2) sensiblement parallèle à la première face (F1), et est adapté pour émettre dans une direction générale déterminée, au travers de la première face (F1), le premier faisceau lumineux (W1) et le deuxième faisceau lumineux (W2).

3. Dispositif selon l'une quelconque des revendications précédentes, **caractérisé en ce que** la première source lumineuse (11) est une source de lumière laser et que le premier rayonnement lumineux est un rayonnement laser (L).

4. Dispositif selon la revendication 3, **caractérisé en ce que** le rayonnement laser (L) a une longueur d'onde comprise entre 400 nm et 500 nm.

5. Dispositif selon l'une quelconque des revendications précédentes, **caractérisé en ce que** la deuxième source de lumière (12) est configurée pour avoir une luminance comprise entre 30 Cd/mm² et 50 Cd/mm².

6. Dispositif selon l'une quelconque des revendications précédentes, **caractérisé en ce que** la deuxième source de lumière (12) comporte au moins deux zones (23a, 23b, 23c, 24a, 24b, 24c) activables sélectivement.

7. Dispositif selon la revendication 6, **caractérisé en ce que** les au moins deux zones (23a, 23b, 23c, 24a, 24b, 24c) sont configurées de sorte à avoir une luminance différente l'une par rapport à l'autre.

8. Dispositif selon la revendication 7, **caractérisé en ce que** les au moins deux zones (23a, 23b, 23c, 24a, 24b, 24c) sont configurées de sorte à avoir :
- une taille différente l'une par rapport à l'autre, et
- un nombre différent d'unités électroluminescentes (15) de dimensions submillimétriques.

9. Dispositif selon l'une quelconque des revendications précédentes, **caractérisé en ce que** le deuxième rayonnement lumineux émis par la deuxième source lumineuse (12) est d'une longueur d'onde inférieure ou égale à 500 nm.

10. Dispositif selon l'une quelconque des revendications précédentes, **caractérisé en ce que** la longueur d'onde du deuxième rayonnement lumineux est contrôlée en fonction de la longueur d'onde du premier rayonnement lumineux.

11. Dispositif selon l'une quelconque des revendications précédentes, **caractérisé en ce que** la deuxième source lumineuse (12) est accolée au dispositif (2) de conversion de longueur d'onde par l'intermédiaire d'une couche absorbante, la couche absorbante étant constituée d'un matériau adapté pour absorber le premier rayonnement lumineux.

12. Dispositif selon l'une quelconque des revendications précédentes, **caractérisé en ce qu'**il comprend un système optique (4) recevant les premier et deuxième faisceaux lumineux émis par le dispositif (2) de conversion de longueur d'onde, le système optique (4) comprenant au moins un dioptre (5) permettant au dispositif d'éclairage de fonctionner comme un feu de code .

13. Dispositif selon l'une quelconque des revendications précédentes, **caractérisé en ce que** la deuxième source lumineuse (12) est adaptée pour émettre, directement ou indirectement, le deuxième rayonnement lumineux vers la première région (R1) de conversion.

14. Dispositif selon l'une quelconque des revendications précédentes, **caractérisé en ce que** le balayage du premier rayonnement lumineux sur la première région (R1) de conversion est effectué à vitesse variable.

15. Dispositif selon l'une quelconque des revendications précédentes, **caractérisé en ce que** la première région (R1) de conversion et la deuxième région (R2) de conversion sont colocalisées dans une même couche de conversion (21) du dispositif de conversion de longueur d'onde, la couche de conversion (21) étant de préférence à base d'au moins un matériau solide (M) incluant le luminophore.

16. Dispositif selon l'une quelconque des revendications précédentes, **caractérisé en ce que** le dispositif (2) de conversion de longueur d'onde comprend une couche de conversion (21) de longueur d'onde déposée sur une couche (16) d'un substrat à base d'un matériau choisi parmi les matériaux bons conducteurs thermiquement.

17. Dispositif selon l'une quelconque des revendications précédentes, dans lequel les unités électroluminescentes (15) sont, au moins pour une partie d'entre eux, activables sélectivement par l'intermédiaire d'une couche d'interconnexion, de sorte qu'il existe plusieurs configurations d'allumage des unités électroluminescentes (15), une taille et/ou une luminance du deuxième faisceau lumineux (W2) étant modifiable par modification de la configuration d'allumage des unités électroluminescentes (15).

## Patentansprüche

1. Beleuchtungsvorrichtung (1) für ein Fahrzeug, umfassend:
- eine Wellenlängenumwandlungsvorrichtung (2);
- eine erste Lichtquelle (11), die eine erste Lichtstrahlung emittiert;
ein Abtastsystem (3), das die erste Lichtstrahlung empfängt und durch Abtasten über einen ersten Umwandlungsbereich (R1) der Wellenlängenumwandlungsvorrichtung projiziert;
eine zweite Lichtquelle (12), die eine zweite Lichtstrahlung emittiert, **dadurch gekennzeichnet, dass** die zweite Lichtquelle (12) eine Halbleiterlichtquelle (14, 15) beinhaltet, die Elektrolumineszenzeinheiten (15) mit submillimetrischen Abmessungen umfasst, und dass die Wellenlängenumwandlungsvorrichtung (2) in der Lage ist, zu emittieren:
- einen ersten Lichtstrahl (W1) aus der Wechselwirkung der ersten Lichtstrahlung mit der Wellenlängenumwandlungsvorrichtung im ersten Umwandlungsbereich (R1) und
- einen zweiten Lichtstrahl (W2) aus der Wechselwirkung des zweiten Lichtstrahls mit der Wellenlängenumwandlungsvorrichtung in einem zweiten Umwandlungsbereich (R2) der Wellenlängenumwandlungsvorrichtung.

2. Vorrichtung nach Anspruch 1 oder 2, **dadurch gekennzeichnet, dass** sich die Wellenlängenumwandlungsvorrichtung (2) in einem Stück von einer ersten Fläche (F1) zu einer zweiten Fläche (F2) erstreckt, die im Wesentlichen parallel zur ersten Fläche (F1) verläuft, und angepasst ist, um in einer gegebenen allgemeinen Richtung durch die erste Fläche (F1) den ersten Lichtstrahl (W1) und den zweiten Lichtstrahl (W2) auszusenden.

3. Vorrichtung nach einem der obigen Ansprüche, **dadurch gekennzeichnet, dass** die erste Lichtquelle (11) eine Laserlichtquelle und die erste Lichtstrahlung eine Laserstrahlung (L) ist.

4. Vorrichtung nach Anspruch 3, **dadurch gekennzeichnet, dass** die Laserstrahlung (L) eine Wellenlänge zwischen 400 nm und 500 nm aufweist.

5. Vorrichtung nach einem der obigen Ansprüche, **dadurch gekennzeichnet, dass** die zweite Lichtquelle (12) konfiguriert ist, um eine Leuchtdichte zwischen 30 Cd/mm2 und 50 Cd/mm2 zu haben.

6. Vorrichtung nach einem der obigen Ansprüche, **dadurch gekennzeichnet, dass** die zweite Lichtquelle (12) mindestens zwei selektiv aktivierbare Zonen (23a, 236, 23c, 24a, 246, 24c) aufweist.

7. Vorrichtung nach Anspruch 6, **dadurch gekennzeichnet, dass** die mindestens zwei Zonen (23a, 235, 236, 236, 236, 24a, 246, 24c) so konfiguriert sind, dass sie eine unterschiedliche Leuchtdichte in Bezug zueinander aufweisen.

8. Vorrichtung nach Anspruch 7, **dadurch gekennzeichnet, dass** die mindestens zwei Zonen (23a, 23b, 230, 230, 230, 24a, 246, 24c) so konfiguriert sind, dass sie :
eine andere Größe voneinander und
eine unterschiedliche Anzahl von Elektrolumineszenzeinheiten (15) mit Submillimeter-Dimensionen.

9. Vorrichtung nach einem der obigen Ansprüche, **dadurch gekennzeichnet, dass** die von der zweiten Lichtquelle (12) emittierte zweite Lichtstrahlung eine Wellenlänge von weniger als oder gleich 500 nm aufweist.

10. Vorrichtung nach einem der vorstehenden Ansprüche, **dadurch gekennzeichnet, dass** die Wellenlänge der zweiten Lichtstrahlung in Abhängigkeit von der Wellenlänge der ersten Lichtstrahlung gesteuert wird.

11. Vorrichtung nach einem der obigen Ansprüche, **dadurch gekennzeichnet, dass** die zweite Lichtquelle (12) über eine absorbierende Schicht an der Wellenlängenumwandlungsvorrichtung (2) befestigt ist, wobei die absorbierende Schicht aus einem Material besteht, das geeignet ist, die erste Lichtstrahlung zu absorbieren.

12. Vorrichtung nach einem der obigen Ansprüche, **dadurch gekennzeichnet, dass** sie ein optisches System (4) umfasst, das den ersten und zweiten Lichtstrahl empfängt, der von der Wellenlängenumwandlungsvorrichtung (2) emittiert wird, wobei das optische System (4) mindestens einen Dioptrien (5) umfasst, der es der Beleuchtungsvorrichtung ermöglicht, als Codelicht zu fungieren.

13. Vorrichtung nach einem der obigen Ansprüche, **dadurch gekennzeichnet, dass** die zweite Lichtquelle (12) so ausgelegt ist, dass sie die zweite Lichtstrahlung direkt oder indirekt in den ersten Umwandlungsbereich (R1) abgibt.

14. Vorrichtung nach einem der vorstehenden Ansprüche, **dadurch gekennzeichnet, dass** die Abtastung des ersten Lichtstrahls auf dem ersten Umwandlungsbereich (R1) mit variabler Geschwindigkeit durchgeführt wird.

15. Vorrichtung nach einem der obigen Ansprüche, **dadurch gekennzeichnet, dass** der erste Umwandlungsbereich (R1) und der zweite Umwandlungsbereich (R2) in derselben Umwandlungsschicht (21) der Wellenlängenumwandlungsvorrichtung zusammen angeordnet sind, wobei die Umwandlungsschicht (21) vorzugsweise auf mindestens einem den Phosphor enthaltenden festen Material (M) basiert.

16. Vorrichtung nach einem der obigen Ansprüche, **dadurch gekennzeichnet, dass** die Wellenlängenumwandlungsvorrichtung (2) eine Wellenlängenumwandlungsschicht (21) umfasst, die auf einer Schicht (16) eines Substrats basierend auf einem Material, ausgewählt aus gut wärmeleitenden Materialien, abgeschieden ist.

17. Vorrichtung nach einem der vorstehenden Ansprüche, bei der die elektrolumineszierenden Einheiten (15) zumindest für einige von ihnen selektiv über eine Verbindungsschicht aktivierbar sind, so dass es mehrere Zündkonfigurationen der elektrolumineszierenden Einheiten (15) gibt, wobei eine Größe und/oder Leuchtdichte des zweiten Lichtstrahls (W2) durch Änderung der Zündkonfiguration der elektrolumineszierenden Einheiten (15) veränderbar ist.

## Claims

1. Lighting device (1) for a vehicle comprising:
- a wavelength conversion device (2);
- a first light source (11) emitting a first light radiation;
a scanning system (3) receiving the first light radiation and projecting it by scanning over a first conversion region (R1) of the wavelength conversion device;
a second light source (12) emitting a second light radiation, **characterized in that** the second light source (12) includes a semiconductor light source (14, 15) comprising electroluminescent units (15) of submillimetric dimensions, and **in that** the wavelength conversion device (2) is capable of emitting:
- a first light beam (W1) from the interaction, at the first conversion region (R1), of the first light radiation with the wavelength conversion device, and
- a second light beam (W2) from the interaction, at a second conversion region (R2) of said wavelength conversion device, of the second light beam with the wavelength conversion device.

2. Device according to claim 1 or 2, **characterized in that** the wavelength conversion device (2) extends in one piece from a first face (F1) to a second face (F2) substantially parallel to the first face (F1), and is adapted to emit in a given general direction, through the first face (F1), the first light beam (W1) and the second light beam (W2).

3. Device according to any of the above claims, **characterized in that** the first light source (11) is a laser light source and the first light radiation is laser radiation (L).

4. Device according to claim 3, **characterized in that** the laser radiation (L) has a wavelength between 400 nm and 500 nm.

5. A device according to any of the above claims, **characterized in that** the second light source (12) is configured to have a luminance between 30 Cd/mm2 and 50 Cd/mm2.

6. Device according to any of the above claims, **characterized in that** the second light source (12) has at least two selectively activatable zones (23a, 236, 23c, 24a, 246, 24c).

7. Device according to claim 6, **characterized in that** the at least two zones (23a, 235, 236, 236, 24a, 246, 24c) are configured so as to have a different luminance with respect to each other.

8. Device according to claim 7, **characterized in that** the at least two zones (23a, 23b, 230, 230, 24a, 246, 24c) are configured so that they have :
a different size from each other, and
a different number of electroluminescent units (15) of submillimetre dimensions.

9. Device according to any of the above claims, **characterized in that** the second light radiation emitted by the second light source (12) is of a wavelength less than or equal to 500 nm.

10. Device according to any of the above claims, **characterized in that** the wavelength of the second light radiation is controlled as a function of the wavelength of the first light radiation.

11. A device according to any of the above claims, **characterized in that** the second light source (12) is attached to the wavelength conversion device (2) through an absorbent layer, the absorbent layer being made of a material adapted to absorb the first light radiation.

12. Device according to any of the above claims, **characterized in that** it comprises an optical system (4) receiving the first and second light beams emitted by the wavelength conversion device (2), the optical system (4) comprising at least one diopter (5) allowing the lighting device to function as a code light.

13. A device according to any of the above claims, **characterized in that** the second light source (12) is adapted to emit, directly or indirectly, the second light radiation to the first conversion region (R1).

14. Device according to any of the above claims, **characterized in that** the scanning of the first light beam on the first conversion region (R1) is carried out at a variable speed.

15. Device according to any of the above claims, **characterized in that** the first conversion region (R1) and the second conversion region (R2) are co-located in the same conversion layer (21) of the wavelength conversion device, the conversion layer (21) preferably being based on at least one solid material (M) including the phosphor.

16. A device according to any of the above claims, **characterized in that** the wavelength conversion device (2) comprises a wavelength conversion layer (21) deposited on a layer (16) of a substrate based on a material selected from good thermally conductive materials.

17. Device according to any of the above claims, in which the electroluminescent units (15) are, at least for some of them, selectively activatable via an interconnection layer, so that there are several ignition configurations of the electroluminescent units (15), a size and/or luminance of the second light beam (W2) being modifiable by changing the ignition configuration of the electroluminescent units (15).
